# FASCICULE DE BREVET EUROPEEN

(11) **EP 1 412 448 B1**
(45) Date de publication et mention de la délivrance du brevet: **08.10.2008**
(21) Numéro de dépôt: 01949524.1
(22) Date de dépôt: 25.06.2001
(51) Int. Cl.: C09K 8/04

(54) **METHODE POUR CONTROLER LA SATURATION D'UNE FORMATION AUX ABORDS D'UN PUITS**
METHODE ZUR KONTROLLE DER SÄTTIGUNG EINER FORMATION IN DER NÄHE EINES BOHRLOCHS
METHOD FOR CONTROLLING SATURATION OF A FORMATION AROUND A WELL

(30) Priorité: 05.07.2000 FR 0008707
(43) Date de publication de la demande: 28.04.2004
(73) Titulaire: Institut Français du Pétrole, 92852 Rueil-Malmaison Cedex (FR); OLEON NV, 9940 Ertvelde (BE)
(72) Inventeur: AUDIBERT, Annie, F-78290 Croissy sur Seine (FR); ARGILLIER, Jean-François, F-92210 Saint Cloud (FR); LONGERON, Daniel, F-78500 Sartrouville (FR); DEWATTINES, Carine, B-1861 Wolvertem (BE); JANSSEN, Michel, B-6001 Marcinelle (BE)
(86) Numéro de dépôt international: PCT/FR2001/002012
(87) Numéro de publication internationale: WO 2002/002713

(56) Documents cités:
- EP-A- 0 398 113
- WO-A-96/40835
- GB-A- 2 283 036
- US-A- 3 882 029
- US-A- 3 979 304

## Description

La présente invention concerne le domaine du forage, ou plus généralement, le domaine des opérations qui nécessitent la circulation d'un fluide dans un puits foré, ledit fluide étant en contact avec les parois rocheuses poreuses et perméables. Pendant ces opérations, le fluide en circulation pénètre plus ou moins dans l'épaisseur de la paroi en fonction de l'efficacité plus ou moins grande des additifs réducteurs de filtrat que l'on peut éventuellement ajouter au fluide. Il est connu que le "filtrat" (volume de fluide ayant pénétré dans la roche) peut provoquer un colmatage plus ou moins sévère de la paroi du puits. Si le puits traverse une zone productrice d'hydrocarbures, la productivité peut en être gravement affectée. La présente invention propose une méthode pour forer un puits, ou intervenir dans un drain destiné à la mise en production d'une formation productrice d'hydrocarbures, tout en favorisant l'écoulement de ces hydrocarbures vers le puits.

Le fluide utilisé lors du forage d'un puits circule au droit de la formation en surpression par rapport à la pression de la formation. Cela permet de limiter les phénomènes de venue et de contrôler la stabilité des parois du puits. Des phénomènes de filtration ont lieu et entraînent la formation d'un cake de filtration. Selon les conditions de circulation (arrêt ou non de circulation de la boue dans le puits), un cake externe et interne ou un cake interne seul est formé lors de la période dite de "spurt". Ce cake de très faible perméabilité permet de protéger la formation et en particulier la roche réservoir de l'invasion par les constituants de la boue de forage. Toutefois, des travaux réalisés récemment (A. Audibert, J-F Argillier, H. Ladva, Way P., Hove A. "Role of Polymers on Formation Damage" SPE 54767 présenté au SPE Formation Damage, La Haye, 1999) mettent en évidence la formation d'une zone, au delà du cake interne, envahie par certains composants de la boue. En particulier dans le cas d'un réservoir à huile foré en boue à l'eau, on observe l'invasion du réservoir au delà du cake interne par une fraction des polymères contenus dans la boue. Ces polymères hydrophiles non retenus dans le cake s'adsorbent alors dans les pores de la roche diminuant ainsi la perméabilité à l'huile de la roche. Ce phénomène est d'autant plus important que l'on se trouve aux abords du puits et cela entraîne, aux abords du puits, l'augmentation de la saturation en eau.

L'invention s'applique avantageusement aux formulations de boue à l'eau proposées pour la traversée des réservoirs, plus généralement appelés "drill-in fluids" (décrits par exemple dans le document : "Drill-In Fluids Control Formation Damage" de Halliday W.S., World Oil-Dec 1994, 43-47).

Les fluides de puits sont des fluides complexes qui ont pour principales fonctions de, notamment, participer au nettoyage du puits en cours de forage ou déjà foré (fluides de complétion), appliquer une pression hydraulique suffisante pour assurer la sécurité du puits, stabiliser les parois du puits, lubrifier les trains de tubes ou de tiges, ou permettre la mise en place des équipements de fond ou la mise en oeuvre de procédé de production (fluides de complétion). Pour réaliser ces fonctions, le fluide de base, ici de l'eau, est additivé de produits spécifiques pour régler, par exemple, la rhéologie, la masse volumique, la capacité de nettoyage, le réglage du filtrat. On ne connaît pas d'additif de fluide de puits ayant une action directe sur la saturation de la roche en contact avec le fluide.

Le document GB-A-2 283 036 divulgue des fluides de forage à base d'eau, contenant un polyalkylène glycol et un ester qui peut être un ester partiel d'un polyol avec un acide gras ; il est revendiqué que ces fluides sont destinés à être utilisés dans des formations de schistes argileux et d'argile, et qu'ils combinent une lubricité élevée avec un pouvoir élevé d'inhibition des schistes argileux. Les exemples divulguent les esters partiels suivants :
- glycéryl monooléate ;
- tétraéthylène glycol monooléate ; et
- glycéryl monoricinoléate

Toutefois, l'exemple 7 montre clairement que l'addition de moins de 3 % en poids de mélange (2,25 % en poids de polyalkylène glycol et 0,75 % en poids de glycérol monooléate) n'apporte pas les propriétés de lubricité élevée.

Le document US-A-5 318 956 (correspondant au document EP-A-0 398 113) divulgue l'utilisation d'esters d'alcools mono- ou poly- fonctionnels avec des acides carboxyliques saturés ou insaturés jusqu'en C36 comme constituant principal de la phase huileuse de fluides de forage du type émulsion "huile dans eau" ("O/W").

Le document US-A-3 882 029 divulgue un fluide de complétion et de "workover" (par fluide de "workover", on entend fluide de contrôle et de re-conditionnement) comprenant des particules solides finement divisées consistant en une solution solide homogène de :
- cire ;
- un ester partiel de glycérol ou de sorbitan avec un acide gras saturé élevé (C12-C20), oléosoluble et ayant des propriétés tensio-actives ;
- un mono-ester de polyéthylène glycol avec un acide gras saturé élevé (C12-C20), dispersible dans l'eau et ayant des propriétés tensio-actives ;
- un copolymère éthylène-vinyl acétate ; et
- un alcool gras.

Le document US-A-3 979 304 divulgue une méthode pour réduire la perméabilité de formations souterraines perméables, consistant à ajouter au fluide de forage des particules d'une solution solide homogène comprenant:
- une cire ;
- un ester partiel d'un composé polyhydroxylé avec un acide gras élevé (C12-C20), oléosoluble et ayant des propriétés tensio-actives ;
- un agent tensio-actif hydrosoluble, pouvant être un mono-ester de polyéthylène glycol avec un acide gras élevé (C12-C20).

Le document WO-A-9640835 divulgue des émulsions "huile dans eau" ("O/W") comprenant une saumure, un triglycéride d'acides gras en C7-C23, un alcool, un émulsifiant et un composé sulfuré.

La présente invention a pour objet de fournir un procédé pour réduire ou prévenir l'endommagement d'une formation poreuse et perméable aux abords d'un puits avec un fluide à base d'eau qui comprenne un additif permettant de réduire ou de prévenir l'endommagement du réservoir. Elle a également pour objet de fournir un tel procédé dans lequel le fluide à base d'eau comprend un additif qui est à même de passer directement dans le filtrat et de s'adsorber suffisamment sur la roche du réservoir.

Ainsi, la présente invention concerne un procédé pour réduire ou prévenir l'endommagement d'une formation poreuse et perméable aux abords d'un puits dans lequel on effectue une circulation d'un fluide dans un puits foré dans une roche réservoir d'hydrocarbures. Le fluide est à base d'eau, à l'exclusion des fluides connus dans le métier comme émulsions "huile dans eau" ("O/W"); en effet, l'émulsion aurait pour effet de boucher les pores et donc d'empêcher le passage de l'additif à travers le cake, contrairement à un des objectifs de l'invention. Le fluide comprend tous les additifs nécessaires aux fonctions d'un fluide de forage et/ou d'intervention, et une quantité inférieure à 0,1 % en poids, d'un ou plusieurs composés choisis dans le groupe des esters partiels de polyols avec des acides gras en C6-C22. Il est particulièrement préféré d'ajouter l'ester partiel sous la forme d'une composition concentrée à base d'ester partiel, ajoutée de telle manière que l'ester partiel se retrouve à une concentration d'environ 1 g/L dans le fluide. De manière surprenante, l'utilisation de tels additifs dans les fluides de forage et/ou d'intervention permet de réduire et de prévenir l'endommagement du réservoir pendant les phases de forage et/ou d'intervention (jusques et y compris au cours des phases de récupération dites primaires) dans les puits forés dans des roches réservoirs d'hydrocarbures. Bien entendu, la nature de ces additifs est déterminée compte tenu de la nature particulière des fluides de puits à base d'eau qui comprennent d'autres additifs avec lesquels l'additif selon l'invention doit être compatible, c'est-à-dire qu'il n'entrave pas les fonctions des autres additifs ou composants du fluide de puits.

Par ailleurs, ces esters auront de préférence un point éclair (mesuré selon la méthode standard ASTM D92) d'au moins 100 °C, ou mieux encore d'au moins 150 °C.

Pour ce qui concerne les polyols constituant les esters partiels utilisés dans la présente invention, ils comprennent les diols, triols, polyols, ainsi que les polyalcoxydes mixtes et les mélanges de polyols.

On peut citer en particulier :
- le glycérol :

   HOCH₂ - CHOH - CH₂OH;
- le diglycérol:

   HOCH₂ - CHOH - CH₂ - O-CH₂ - CHOH - CH₂OH;
- les polyglycérols :

   HOCH₂ - CHOH - CH₂ - (OCH₂ - CHOH - CH₂)ₙ OCH₂ - CHOH - CH₂OH,

   avec n compris entre 1 et 8, et de préférence entre 1 et 4 ;
- le triméthylolpropane :

   HOCH₂CH₂ - CHCH₂OH - CH₂CH₂OH ;
- le pentaérythritol :

   C(CH₂OH)₄ ;
- l'éthylène glycol :

   HOCH₂CH₂OH ;
- les polyéthylène glycols : H(OCH2CH2)ₙOH,
   avec n compris entre 2 et 30, et de préférence entre 2 et 12 ;
- le propylène glycol :

   CH₃ - CHOH- CH₂OH ;
- les polypropylène glycols :

   H(OCH(CH3)CH2)ₙOH,

   avec n compris entre 2 et 30, et de préférence entre 2 et 12 ; et
- les mélanges polyéthylène glycol - polypropylène glycol.

Les acides gras constituant les esters partiels utilisés dans la présente invention ont une longueur de chaîne comprise entre C6 et C22, de préférence entre C6 et C12 ou encore mieux de C8 à C10. Ces chaînes peuvent être linéaires ou branchées, saturées ou insaturées d'origine naturelle oui synthétique. En général, on utilise des mélanges d'acides gras, de préférence d'origine naturelle, de longueurs de chaînes essentiellement comprises dans ces limites.

Les esters utilisés dans la présente invention sont des esters partiels : ils comportent au moins un groupe hydroxyle libre et au moins un groupe hydroxyle esterifié par un acide gras. Le rapport molaire du nombre de groupes hydroxyles libres au nombre de groupes hydroxyles estérifiés par un acide gras est de préférence d'au moins 1:1, un rapport préféré étant d'au moins 2:1, le rapport le plus préféré étant d'au moins 3:1.

L'ester partiel utilisé dans la présente invention peut être obtenu par glycérolyse, par estérification directe ou par transestérification à partir d'une graisse (ou d'une huile) et d'un alcool. Toutes les graisses végétales ou animales peuvent convenir, dans la mesure où elles ont une longueur de chaîne essentiellement comprise entre C6 et C22, de préférence comprise entre C6 et C12, ou encore mieux de C8 à C10. En tant que graisse (ou huile), il faut comprendre aussi bien les triglycérides que les acides gras et les esters méthyliques. Toute la gamme équivalente du ricin doit également être comprise. La composition additive selon l'invention permet de réunir les différentes propriétés nécessaires à son efficacité maximale, en particulier ce qui concerne la modification de mouillabilité de la roche.

Autrement dit, la composition additive présente les caractéristiques suivantes, détaillées plus loin :
- une bonne dispersion dans l'eau du fluide de puits, c'est-à-dire une solubilité suffisante dans l'eau, même si elle n'est pas totale ;
- une très bonne compatibilité avec le fluide à base d'eau, c'est-à-dire qu'elle n'interfère pas avec les propriétés requises par le fluide, apportées par d'autres composés ou additifs ;
- capacité de passer directement dans le filtrat, c'est-à-dire sans être retenue ou bloquée dans le cake éventuellement formé sur la paroi du puits ;
- pas de formation d'émulsion entre le filtrat aqueux et l'huile du réservoir ;
- et adsorption suffisante sur la roche.

Au sens de la présente invention, on entend par dispersion suffisante la propriété que doit posséder l'ester partiel de se disperser ou éventuellement de se dissoudre dans l'eau ; ainsi, dans le fluide, l'ester partiel est présent sous forme de soluté ou de dispersion (et dans ce dernier cas, l'ester partiel est dispersé tel quel et non sous forme d'un mélange avec d'autres composés ou additifs).

Les Demanderesses ont observé que les esters partiels utilisés dans la présente invention n'interfèrent pas avec les propriétés du fluide apportées par d'autres composés ou additifs.

Les Demanderesses ont également observé que les esters partiels utilisés dans la présente invention ont la capacité de passer directement dans le filtrat pour aller s'adsorber sur la roche du réservoir. Sans vouloir être liées par une théorie, les Demanderesses pensent que cette adsorption est la cause de la réduction et la prévention de l'endommagement du réservoir apportées par le fluide de l'invention et par son utilisation dans le procédé de l'invention, ainsi que l'ont démontré les exemples ci-après.

Pour préserver cette capacité de passer directement dans le filtrat, le fluide à base d'eau ne doit pas être un fluide du type émulsion "O/W", dont les gouttelettes boucheraient les pores du cake.

Pour la même raison, l'ester partiel, présent dans le filtrat, ne doit pas entraîner la formation d'émulsion entre celui-ci et l'huile du réservoir. Cette propriété est aisément déterminée par le test de la bouteille, décrit ci-après, que l'on réalisera de préférence avec une huile de réservoir typique pour la région.

L'additif selon l'invention peut être utilisé sous forme concentrée (il peut alors être ajouté à une concentration par exemple d'environ 1 g/L, comme mentionné ci-dessus) ou encore dilué dans une huile solvant (une huile végétale ou animale décrite ci-dessus, voire une huile minérale).

La présente invention sera mieux comprise et ses avantages apparaîtront plus clairement à la lecture de la description suivante d'exemples, nullement limitatifs, illustrés par les figures ci-annexées, parmi lesquelles :
- La figure 1 montre les moyens d'essais sur un échantillon de roche poreuse ;
- La figure 2 montre en coupe le dispositif de visualisation de l'étalement d'une goutte.

Le polyglycérol utilisé dans les exemples ci-dessous a la composition suivante :
- glycérol : environ 27 % (entre 24 et 30 %) ;
- diglycérol : environ 31 % (entre 28 et 34 %) ;
- triglycérol : environ 23 % (entre 20 et 26 %) ;
- tétraglycérol : environ 12 % (entre 9 et 15 %) ;
- pentaglycérol : environ 7 % (entre 4 et 10 %) ;
c'est-à-dire qu'il présente un degré de polymérisation compris entre 2 et 3, en fait d'environ 2,4, et un nombre moyen de fonctions hydroxyles d'environ 4,4.

Il est ensuite estérifié avec une stoechiométrie mole/mole avec un acide gras C8-C10 pour arriver à une répartition majoritaire de polyglycérol mono C8-C10, dénommé ci-dessous PG 8/10, avec un rapport molaire OH libres/OH estérifiés d'environ 3,4:1. Par acide gras C8-C10, il faut comprendre acide industriel comprenant essentiellement des acides C8 ou C10, mais pouvant aussi contenir des quantités faibles d'acides plus lourds ou plus légers, ceci résultant de l'origine naturelle et du procédé de fabrication.

### Essais en milieux poreux :

Les essais ou expériences en milieu poreux ont pour objectif de simuler le passage du filtrat dans une roche réservoir et d'étudier l'interaction de celui-ci sur les saturations en place dans la roche. Deux types d'expérience sont effectués :
(i) simulation du passage d'un filtrat reconstitué à travers la roche ;
(ii) simulation d'une filtration complète d'une boue à l'eau à travers une roche.

Dans les deux cas, on observe le changement de saturation en eau résiduelle de la roche, ainsi que la perméabilité à l'huile dans le sens opposé au sens de filtration (en retour ou "back flow").

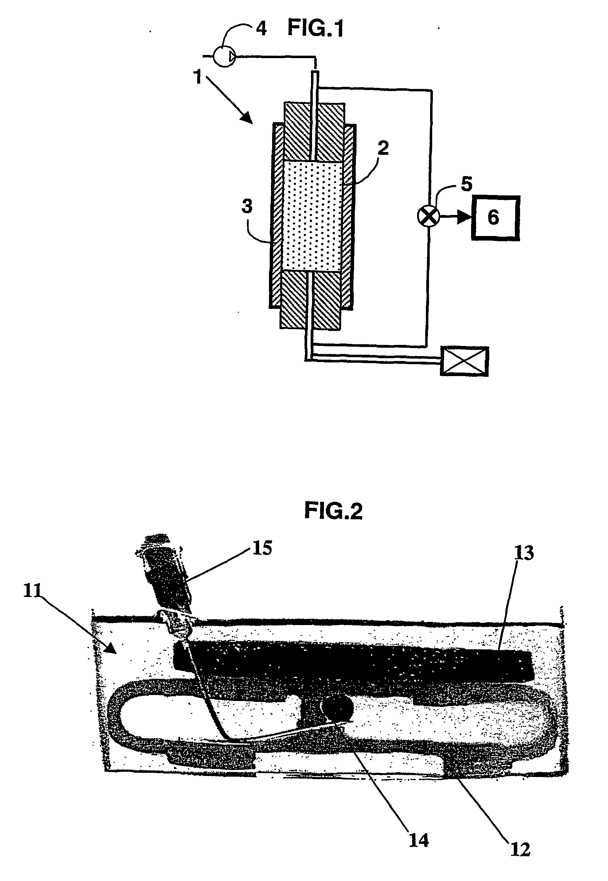

Le dispositif expérimental est représenté schématiquement sur la figure 1.

Le milieu poreux 2 est placé dans une cellule Hassler 1. Une pression de confinement de 2 MPa est appliquée sur le milieu à l'aide d'une capote 3 de sertissage. On peut faire circuler à l'intérieur du milieu poreux de la saumure, de l'huile ou une simulation de filtrat. Le débit de la solution injectée est contrôlé à l'aide d'une pompe à piston 4 de type Pharmacia. Un capteur 5 de pression différentielle est placé entre l'entrée et la sortie de la cellule. Le dispositif est relié à un ordinateur 6 qui permet entre autres le calcul de la perméabilité de la roche au liquide injecté.

La carotte 2 est constituée de grès de Claschach pour les expériences (i) ou de grès de Vosges pour les expériences (ii). Elle a les dimensions suivantes : longueur : 60 mm, section : 32,7 mm, volume de pore Vp de l'ordre de 8,5 cm³, porosité de l'ordre de 17 %.

Le mode opératoire est le suivant :

### (i) simulation du passage à travers la roche d'un filtrat reconstitué

Trois étapes sont nécessaires :

### 1) Mise en place des conditions initiales :

Le milieu poreux doit être dans des conditions proches de celles du réservoir. Il faut donc saturer la carotte à la saumure, puis à l'huile :
(a) *Saturation de la roche à la saumure* : la carotte est saturée dans un dessiccateur tirant sous vide, puis elle est placée sous 2 MPa de pression de confinement et parcourue par de la saumure (40 g/L NaCl, 5 g/L KCl) à 10 cm³/h pendant 48 h avec 10 bars de pression de pores.
(b) *Mesure de la perméabilité à la saumure :* la carotte est traversée par de la saumure à différents débits (Q : 300, 200, 100 cm³/h) et on mesure la différence de pression (ΔP) entre les extrémités du milieu poreux. La pente de la droite Q = f(ΔP) permet de calculer la perméabilité de la roche à la saumure Kw (en milli Darcy).
*(c) Mesure de la perméabilité à l'huile :* injection d'huile SOLTROL 130® (huile raffinée commercialisée par Phillips. Chemical Co., de viscosité 0,7 mPa.s à 80 °C) à 10 cm³/h pendant 24 heures, puis augmentation progressive du débit de 100 cm³/h à 500 cm³/h. Le volume d'eau recueilli permet de calculer le taux de saturation de l'huile (So) et de l'eau (Sw).

La carotte est ensuite traversée par de l'huile à différents débits (300, 200, 100 cm³/h) et on mesure la pression différentielle ΔP, La pente de la droite Q = f(ΔP) permet de calculer la perméabilité de la roche à l'huile Ko (en milli Darcy).

### 2) Phase d'invasion par le filtrat :

On injecte de la solution simulant le filtrat à 10 cm³/h (saumure ; ou saumure + additif ; ou saumure + polymères ; ou saumure + polymères + additif). Le volume d'huile recueilli permet de calculer les nouveaux taux de saturation de l'eau et de l'huile.

### 3) Phase de simulation de mise en production du puits :

On simule la mise en production du puits en injectant de l'huile à 10 cm³/h en "back flow" (c'est-à-dire dans le sens inverse de l'injection du filtrat). Le volume d'eau recueilli permet de calculer les nouveaux taux de saturation de l'eau et de l'huile Sw et So. La carotte est ensuite traversée par de l'huile à différents débits (300, 200, 100 cm³/h) et on mesure la pression différentielle ΔP. La pente de la droite Q = f(ΔP) permet de calculer la perméabilité de la roche à l'huile Ko₁ (en mD).

### (ii) Filtration d'une boue à l'eau à travers la roche

### 1) Mise en place des conditions initiales : on procède comme précédemment.

### 2) Filtration dynamique (600 s⁻¹) en pression (3,5 MPa) et température:

La carotte, une fois saturée dans les conditions d'un réservoir, est placée dans une cellule de filtration dynamique. On filtre alors une boue de forage à base d'eau et, lors de la filtration, il y a formation d'un cake externe et interne. Cette expérience est plus proche des conditions réelles puisque la carotte est traversée par un filtrat réel de boue à l'eau et non une simple simulation de filtrat.

### 3) Mise en production du puits :

La carotte est ensuite transférée dans la cellule Hassler et on mesure comme précédemment, par injection d'huile en "back flow", les saturations à l'eau et l'huile et la perméabilité retour à l'huile.

### Exemple 1 : Modification des saturations (saumure et saumure plus additif)

Les essais consistent à injecter dans un milieu poreux préalablement saturé en présence d'eau et d'huile dans des conditions Swi (saturation en eau initiale) une saumure dans laquelle est ajoutée ou non l'additif selon l'invention (essai de type (i)).

Les résultats sont indiqués dans le tableau suivant :

**Tableau 1**

| | Sw (%) | Ko (mD) | |
|---|---|---|---|
| Saturation à la saumure | 100 | | Conditions initiales |
| Injection d'huile | 18,1 | 775 | |
| Après injection de filtrat (imbibition) | 55,5 | | |
| Après "back flow "à l'huile SOLTROL® | 15,8 | 850 | |

où:
- Sw est la saturation en eau (pourcentage en eau contenue dans le volume de pore).
- Ko est la perméabilité de la carotte à l'huile exprimée en millidarcy. (en unité SI, on appliquera la conversion : 1 Darcy = 9,87.10⁻¹³ m²)

En présence de 0,1 g/L d'additif PG8/10 dans la saumure, les résultats deviennent :

**Tableau 2**

| | Sw(%) | Ko(mD) | |
|---|---|---|---|
| Saturation à la saumure | 100 | | Conditions initiales |
| Injection d'huile | 16 | 630 | |
| Après injection de filtrat (imbibition) | 36,7 | | |
| Après "back flow" à l'huile® | 0 | 763 | |

Ces essais de filtration montrent que l'addition de 0,1 g/L de l'additif PG8/10 permet de chasser la grande majorité de l'eau résiduelle. L'ajout de l'additif dans une saumure injectée en milieu poreux permet donc de modifier les saturations dans le sens d'un déplacement de l'eau résiduelle et donc vers de plus grandes saturations en huile. Notons qu'on observe aussi une augmentation de la perméabilité à l'huile après "back flow".

### Exemple 2 : Modification des saturations (saumure contenant en plus du polymère)

On effectue les mêmes expériences en présence de polymère (polyacrylamide PAM) à 0,5 g/L afin de se rapprocher de la composition réelle d'un filtrat de boue à base d'eau. En présence de PAM seul, il n'y a pas de modification de la saturation en eau résiduelle. En revanche, la perméabilité à l'huile est diminuée à cause de l'adsorption du polymère sur la roche et du colmatage des pores de celle-ci par les agrégats de polymère. Comme on le voit dans l'exemple suivant, en ajoutant le PG8/10, la majorité de l'eau résiduelle est chassée. Notons aussi que la diminution de la perméabilité à l'huile de la roche est moins importante qu'en présence de PAM seul.

**Tableau 3**

| | Sw (%) | Ko (mD) | |
|---|---|---|---|
| Saturation à la saumure | 100 | | Conditions initiales + 0,5 g/L de PAM |
| Injection d'huile | 17,5 | 810 | |
| Après injection de filtrat (imbibition) | 50,4 | | |
| Après "back flow" à l'huile SOLTROL® | 15 | 693 | |

En présence de 0,1 g/L de PG8/10 dans la saumure, les résultats deviennent :

**Tableau 4**

| | Sw (%) | Ko (mD) | |
|---|---|---|---|
| Saturation à la saumure | 100 | | Conditions initiales + 0,5 g/L de PAM |
| Injection d'huile | 15 | 738 | |
| Après injection de filtrat (imbibition) | 40,6 | | |
| Après "back flow" à l'huile SOLTROL® | 1 | 680 | |

On peut donc en conclure que même en présence de polymères, l'addition de PG8/10 chasse la majorité de l'eau résiduelle et permet de limiter la réduction de perméabilité à l'huile.

### Exemple 3 Modification des saturations (formulation complète)

Pour se placer dans des conditions plus réelles, on effectue une filtration dynamique, puis on simule la remise en production du puits (essai de type (ii)). La formulation de boue à base d'eau est appelée FLOPRO®, proposée par la Société MI Drilling Fluids (USA).

Sa composition est la suivante:

| | |
|---|---|
| FLOVIS® : | 6g/L (xanthane - viscosifiant) |
| FLOTROL® : | 7 g/L (amidon - réducteur de filtrat) |
| HY-MOD PRIMA® : | 28,5 g/L (argile de charge) |
| NaCl : | 20 g/L |
| KCl : | 20 g/L |
| IDCARB 75® : pH=8 | 360 g/L (carbonate) |

Les résultats sont les suivants :

**Tableau 5**

| | Sw (%) | Ko (mD) | |
|---|---|---|---|
| Saturation à la saumure | 100 | | Conditions initiales FLOPRO® |
| Injection d'huile | 36,8 | 1047 | |
| Après injection de la boue (imbibition) | 73 | | |
| Après "back flow" à l'huile SOLTROL® | 53 | 645 | |

En présence de 0,1 g/L de PG8/10 dans la saumure, les résultats deviennent :

**Tableau 6**

| | Sw (%) | Ko (mD) | |
|---|---|---|---|
| Saturation à la saumure | 100 | | Conditions initiales FLOPRO® |
| Injection d'huile | 32,6 | 1283 | |
| Après injection de la boue (imbibition) | 57 | | |
| Après "back flow" à l'huile SOLTROL® | 28,6 | 845 | |

Ces essais réalisés sur une formulation complète confirment les bons résultats obtenus sur les saturations (on obtient une saturation en eau résiduelle après "back flow" d'huile d'environ 29 % en présence de 1 g/L de PG8/10, au lieu de 53 % sans additif).

### Exemple 4 : Etalement d'une goutte

On cherche à mettre en évidence l'effet de l'additif sur la mouillabilité de la roche. Pour cela, on observe l'étalement d'une goutte d'huile sur la surface d'une roche (grès de Claschach) immergée dans une solution aqueuse salée contenant, ou ne contenant pas de l'additif selon l'invention.

Le dispositif expérimental (figure 2) est constitué d'un cristallisoir 10 contenant une solution aqueuse 11 (40 g/L NaCl, 5 g/L KCl), d'un support de roche 12, d'une rondelle de roche 13, d'une goutte d'huile 14 (SOLTROL®) déposée à l'aide d'une seringue 15.

Le mode opératoire est le suivant : une tranche de roche de type grès de Claschach est maintenue suspendue dans une solution aqueuse salée contenant ou non l'additif. Après une immersion d'environ 40 secondes, une goutte de d'huile SOLTROL® colorée par du bleu de soudan est introduite au niveau de la surface de la roche à l'aide d'une aiguille. On observe alors la forme de la goutte en présence ou non dans la solution de l'additif selon l'invention.

On observe, dans l'eau salée seule, que la goutte d'huile est bien ronde et ne s'étale pas (figure 2). La roche est donc préférentiellement mouillable à l'eau. A partir de 0,3 g/L de PG8/10 dans la saumure, on observe un étalement de la goutte d'huile sur la roche et même une pénétration de cette dernière à 2 g/L de produit actif. Ces essais, non illustrés ici, confirment que le PG8/10 augmente la mouillabilité de la roche à l'huile.

Les tensions superficielles (saumure/air) et interfaciale (saumure/SOLTROL®) ont été mesurées à 25 °C. La saumure utilisée contient 40 g/L de NaCl et 5 g/L de KCl. Sans additif, la tension superficielle saumure/air est de 72 mN/m. En présence de 100 ppm d'additif, elle tombe à 25 mN/m. Sans additif, la tension interfaciale saumure/SOLTROL® est de 38 mN/m. En présence de 10 ppm d'additif, elle chute à 19 mN/m pour atteindre 14 mN/m avec 15 ppm d'additif. Les résultats montrent que le PG8/10 a une activité interfaciale certaine, puisqu'il peut abaisser la tension superficielle de l'eau à 25 mN/m, la tension interfaciale saumure/SOLTROL® à 14 mN/m et ce, pour des concentrations faibles, inférieures à la CMC (concentration micellaire critique) du PG8/10 qui se situe à environ 100 ppm.

### Exemple 5 : Essai sur longue carotte

L'efficacité de la présente invention est mise en évidence au travers d'un essai de simulation d'endommagement des réservoirs réalisé sur des échantillons de roche de 40 cm de long. Le détail de l'expérimentation peut être trouvé dans le document suivant : "Performance Evaluation and Formation Damage Potential of New Water Based Drilling Formulations", Argillier J-F, Audibert A., Longeron D. SPE Drilling and Completion, 14, n°4, 266-273, 1999. La roche utilisée est du grès de Claschach, de composition 94,7 % quartz, 2,6 % feldspar potassique, 0,5 % chlorite, 0,7 % illite (dont le mica). L'échantillon est placé en conditions dites de saturation irréductible en eau (Swi) par mise sous vide, saturation en saumure, puis injection d'huile SOLTROL 130® (environ 10 volumes de pores). La perméabilité à l'huile de l'échantillon est alors mesurée (Ko à Swi). L'échantillon de roche est mis au contact du fluide de forage et/ou d'intervention qui circule au droit de la face avant de l'échantillon selon les conditions suivantes : surpression de 0,35 à 2 MPa par palier de 0,5 MPa toutes les 2 minutes, puis stabilisation à 2 MPa où la boue circule à un débit de 5 L/mn. Lors de la filtration, de l'huile est produite en extrémité de l'échantillon, ce qui correspond à l'envahissement de la carotte par le filtrat de la boue. L'essai est arrêté au "break through" du filtrat, c'est-à-dire à la sortie de la première goutte de filtrat au bout de la carotte.

La boue utilisée ici est une formulation commercialisée par la Société MI Drilling Fluids (USA) et contient: 6 g/L de FLOVIS® (xanthane), 7 g/L de FLOTROL® (amidon), 20 g/L de NaCl, 20 g/L de KCl, 360 g/L de carbonate de calcium (Essai 1) ou additionnée de 0,1 g/L de PG8/10 (Essai 2).

Les résultats des deux essais sont donnés de manière comparative dans le tableau suivant :

**Tableau 7**

| | Essai 1 | Essai 2 |
|---|---|---|
| Porosité, **Φ** (%) | 16,3 | 16,1 |
| Perméabilité au gaz, **kg** (mD) | 685 | 546 |
| Perméabilité à l'eau, **kw** (mD) | 533 | 416 |
| Perméabilité à l'huile à Swi, **koi** (mD) | 452 | 281 |
| Perméabilité à l'huile après "back flow", **koi** (mD) | 176 | 206 |
| % RP perméabilité retour | 39 | 73 |
| Sw après "back flow" (%) | 27,8 | 29,5 |

On observe un écart significatif des perméabilités retour (après "back flow") lorsque la boue est additivée avec du PG8/10 et ce, particulièrement sur les premiers centimètres de la carotte. Cela indique que, lors du "back flow", le milieu poreux se sature à nouveau en huile plus aisément dans le cas de la boue en présence d'additif. On constate donc que l'additif entraîné avec le filtrat bloque préférentiellement les sites d'adsorption limitant ainsi les phénomènes d'adsorption/rétention des polymères contenus dans la boue, donc entraînés avec le filtrat au sein du milieu poreux. Cela permet de limiter le blocage, ou le rétrécissement des pores par les polymères, et ainsi d'améliorer la perméabilité à l'huile.

### Exemple 6: Passage de l'additif à travers le cake

L'additif étant ajouté au fluide de forage ou au fluide de puits, il est indispensable qu'il puisse pénétrer dans la formation rocheuse perméable. Dans le cas d'un fluide de forage, il est indispensable que la molécule puisse passer à travers le cake dans le filtrat. On a donc étudié le passage de la molécule à travers le cake. Les essais présentés ci-dessous ont été effectués sur les boues *GREEN BOND* (70 g/L de GREEN BOND®, bentonite commercialisée par la société SBF ; 1 g/L de PAC LV, polymère anionique de cellulose de faible viscosité ; 1 g/L de NaCl) et *FLOPRO* (voir exemple 3).

Dans un premier temps les boues sont centrifugées avec et sans PG8/10 afin de connaître l'adsorption du PG8/10 et des polymères sur l'argile. D'autre part, les boues sont filtrées pendant 30 minutes sous 0,7 MPa et à température ambiante. Toutes les solutions obtenues sont analysés au COT afin de pouvoir établir un bilan matière en ppm de carbone. Pour connaître la correspondance entre les ppm de molécule et de carbone, la courbe correspondante à l'étalonnage du PG8/10 a été obtenue.

Pour la boue *GREEN BOND,* les résultats montrent que 35 % du PG8/10 s'adsorbe sur l'argile et sur les 65 % restant, 84 % passe à travers le cake.

Pour la boue *FLOPRO,* le bilan matière est plus complexe en raison de la présence des polymères, qui contribuent à la valeur de carbone mesurée dans le filtrat. Cela dit, on observe en présence de PG8/10 une forte augmentation de carbone dans le filtrat qui est dû en grande partie à la présence de PG8/10 dans le filtrat.

Ces essais montrent qu'une partie des molécules de PG8/10 passe à travers le cake et sera donc disponible pour modifier les saturations dans la formation pétrolière.

### Exemple 7 : Compatibilité avec les constituants d'une boue de forage

On a vérifié la compatibilité du produit avec les différents constituants d'une boue. Pour ce faire, nous avons étudié les propriétés de la boue contenant l'additif en terme de rhéologie et de filtration.

Les résultats de cette étude sur les boues *GREEN BOND* et *FLOPRO* avec et sans PG8/10, avant (A-V) et après vieillissement (P-V) sont résumés dans le tableau suivant :

**Tableau 8**

| | | A-V | | P-V | | A-V | | P-V | |
|---|---|---|---|---|---|---|---|---|---|
| | | Sans PG8/10 | Avec PG8/10 | Sans PG8/10 | Avec PG8/10 | Sans PG8/10 | Avec PG8/10 | Sans PG8/10 | Avec PG8/10 |
| | | boue *GREEN BOND* | | | | boue *FLOPRO* | | | |
| Etude de la viscosité | VA | 36 | 38 | 33 | 34 | 9 | 7 | 16 | 15 |
| | VP | 16 | 13 | 14 | 15 | 6 | 6 | 12 | 11 |
| | YV | 40 | 42 | 38 | 38 | 6 | 2 | 8 | 8 |
| | Gel 0\10 | 24\26 | 21\27 | 22\24 | 20\24 | 5\10 | -\- | 12\6 | 5\- |
| Filtration | Vol. filtré 30 min | 8 ml | 8 ml | 7 ml | 7 ml | 14 ml | 14 ml | 14 ml | 14 ml |

| | | | | | | | | | |
|---|---|---|---|---|---|---|---|---|---|
| VA : viscosité apparente en centipoise VP : viscosité plastique en centipoise (1 centipoise = 0,001 Pa.s) YV : yield value en 1b/100ft². | | | | | | | | | |

L'addition de 1 g/L de PG8/10 ne modifie pas significativement les propriétés de filtration ou de rhéologie des boues testées, ce qui montre qu'un tel additif, tel que défini dans la présente invention, est compatible avec les constituants conventionnels des fluides de forage et/ou d'intervention.

### Exemple 8 : test de la bouteille

Dans l'optique d'éviter un endommagement additionnel de la formation à la paroi, il convient d'évaluer le risque de formation d'émulsions in situ entre les fluides de réservoir (saumure et huile) et le filtrat de la boue.

Ainsi, les conditions à remplir pour le système sont, entre autres, la compatibilité du filtrat de boue à l'eau avec les fluides de réservoir.

On fait varier la proportion de chaque phase pour déterminer la formation d'émulsions sous forme de diagramme ternaire. La formation et la stabilité d'émulsion sont caractérisées par les tests "de la bouteille" ("Bottle Tests") tels que décrits ci-après.

On met en contact la saumure (NaCl, 20 g/l) une phase organique composée de l'huile de réservoir, ces deux composants constituant les fluides de réservoir, et du filtrat de la boue contenant l'additif de l'invention.

Le filtrat est reconstitué à partir d'eau, de sels et de polymères (xanthane 0,5 g/L, amidon 0,5 g/L). On prépare un mélange A composé de 80 ml d'huile de réservoir et 20 ml de phase aqueuse et un mélange B composé de 60 ml d'huile de réservoir et 40 ml de phase aqueuse. La phase aqueuse est composée de saumure (fluide de réservoir) et du filtrat de boue contenant 1 g/L de l'additif selon les proportions 25/75, 50/50, 75/25 en volume. L'agitation est réalisée avec un barreau aimanté sur un agitateur magnétique dans le cas de l'huile réelle (agitation moyenne pendant l'incorporation goutte à goutte de la phase aqueuse suivie d'une agitation à vitesse maximum pendant 15 minutes) ou à l'aide d'un Hamilton Beach pour l'huile modèle (agitation à faible vitesse "low speed" pendant l'incorporation goutte à goutte de la phase aqueuse, suivie d'une période d'agitation à la même vitesse pendant 15 minutes). L'émulsion est versée dans une fiole à décanter et l'on observe ou non son cassage.

On décrit ci-après les résultats obtenus avec chacun des additifs suivants, utilisés à 1g/L:
1. Polyglycérol mono oléate (C18)
2. Polyglycérol mono myristate (C14)
3. Polyglycérol mono laurate (C12)
4. Polyglycérol mono C8-C10
5. Polyglycérol mono hexanoate (C6)

L'huile de réservoir utilisée est une huile réelle dont les propriétés sont données ci-après :
- Masse volumique (20°C) : 850 kg/m3
- Viscosité (20°C) : 8,3 cP
- Composition (méthode SARA) :
- Saturés : 56%
- Aromatiques : 38%
- Résines : 6%
- Asphaltènes : 0,26%

Quelques essais ont été réalisés avec une huile modèle : SOLTROL 130®, qui, contrairement à l'huile réelle, ne contient pas de tensio-actifs naturels.

Le risque d'émulsion est précisé dans le tableau suivant (observations réalisées après 16 heures, sauf indication contraire) :

**Tableau 9**

| Système | % de filtrat dans la phase aqueuse | Mélange A (80/20) aspect de l'émulsion | Mélange B (60/40) aspect de l'émulsion |
|---|---|---|---|
| Pas d'additif | 0 | émulsion eau-huile (20% en volume) | émulsion eau-huile grossière (40% en volume) |
| Pas d'additif | 25 | émulsion eau-huile (20% en volume) | émulsion eau-huile homogène |
| Pas d'additif | 50 | émulsion eau-huile homogène | émulsion eau-huile grossière (40% en volume) |
| Pas d'additif | 75 | émulsion eau-huile homogène | émulsion eau-huile grossière (40% en volume) |
| 1 | 25 | séparation de phase (17% eau) | séparation de phase (13% d'eau en 30 minutes) |
| 1 | 50 | séparation de phase (17% eau) | séparation de phase (13% d'eau en 30 minutes) |
| 1 | 75 | séparation de phase (17% eau) | séparation de phase (13% d'eau en 30 minutes) |
| 2 | 25 | séparation de phase (17% eau) | séparation de phase (13% d'eau en 30 minutes) |
| 2 | 50 | séparation de phase (17% eau) | séparation de phase (13% d'eau en 30 minutes) |
| 2 | 75 | séparation de phase (17% eau) | séparation de phase (13% d'eau en 30 minutes) |
| 3 | 25 | séparation de phase (17% eau) | séparation de phase (13% d'eau en 30 minutes) |
| 3 | 50 | séparation de phase (17% eau) | séparation de phase (13% d'eau en 30 minutes) |
| 3 | 75 | séparation de phase (17% eau) | séparation de phase (13% d'eau en 30 minutes) |
| 4 | 25 | 6% émulsion grossière + eau | séparation de phase . (13% d'eau en 30 minutes) |
| 4 | 50 | 8% émulsion grossière + eau | séparation de phase (13% d'eau en 30 minutes) |
| 4 | 75 | 10% émulsion grossière + eau | séparation de phase (13% d'eau en 30 minutes) |
| 5 | 25 | 17% émulsion grossière + eau | émulsion grossière (17% en volume en 1 heure) |
| 5 | 50 | 17% émulsion grossière + eau | séparation de phase (13% d'eau en 1 heure) |
| 5 | 75 | 17% émulsion grossière + eau | séparation de phase (13% d'eau en 1 heure) |

Dans tous les cas, la présence de l'additif dans le filtrat va dans le sens d'un cassage de l'émulsion. Plus la chaîne grasse est longue, plus le cassage est efficace.

Les résultats des essais complémentaires réalisés avec l'huile modèle Soltrol 130® sont rassemblés dans le tableau ci-dessous :

**Tableau 10**

| Système | % de filtrat dans la phase aqueuse | Mélange B (60/40) |
|---|---|---|
| Pas d'additif | 0 | Séparation totale |
| Pas d'additif | 50 | Séparation totale : phase aqueuse et phase organique troubles |
| 1 | 50 | Séparation totale: phase aqueuse et phase organique troubles |
| 2 | 50 | Séparation totale : phase aqueuse et phase organique troubles |
| 3 | 50 | Séparation totale: phase aqueuse et phase organique troubles |
| 4 | 50 | Séparation totale : phase aqueuse et phase organique troubles |
| 5 | 50 | Séparation totale : phase aqueuse et phase organique troubles |

Ces résultats confirment les précédents : l'additif ne favorise pas la formation d'une émulsion entre l'huile et la phase aqueuse.

On a en outre remarqué que, en l'absence d'agitation, les additifs correspondant aux chaînes acides les plus longues ont tendance à former de légers précipités blancs, ce qui indique que l'on approche la limite de solubilité. Un tel phénomène pourrait entraîner des interactions avec les autres constituants de la boue.

## Revendications

1. Méthode pour réduire ou prévenir l'endommagement d'une formation poreuse et perméable aux abords d'un puits, dans laquelle on effectue les étapes suivantes:
- on met en circulation dans ledit puits un fluide à base d'eau n'étant pas une émulsion "O/W",
- on ajoute une quantité inférieure à 0,1% poids d'un ou plusieurs composés choisis dans le groupe des esters partiels de polyols avec des acides gras en C6-C22,
- on choisit les longueurs des chaînes des parties acide et alcool telles que, le ou les composés:
- sont dispersibles ou solubles dans l'eau,
- ne forment pas d'émulsion entre le filtrat aqueux et l'huile du réservoir,
- passent directement dans le filtrat à travers le cake sans être retenus ou bloqués dans le cake éventuellement formé sur la paroi du puits,
- s'adsorbent sur la roche du réservoir.

2. Méthode selon la revendication 1, dans laquelle la longueur de chaînes des acides gras est comprise entre C6 et C12, et de préférence entre C8 et C10.

3. Méthode selon l'une des revendications 1 et 2 dans laquelle, dans l'ester partiel, le rapport molaire du nombre de groupes hydroxyles libres au nombre de groupes hydroxyles estérifiés par un acide gras est d'au moins 1:1, de préférence au moins 2:1, le plus préféré au moins 3:1.

4. Méthode selon l'une des revendications 1 à 3, dans laquelle ledit polyol est un polyglycérol composé de 24 à 30% molaire de glycérol, de 28 à 34% molaire de diglycérol, de 20 à 26% molaire de triglycérol, de 9 à 15 % molaire de tétraglycérol, 4 à 10% molaire de pentaglycérol.

5. Méthode selon la revendication 4, dans laquelle le polyglycérol est composé de 27% molaire dé glycérol, de 31% molaire de diglycérol, de 23% molaire de triglycérol, de 12 % molaire de tétraglycérol, 7% molaire de pentaglycérol,

## Claims

1. Method to reduce or to prevent reservoir damage of a porous permeable formation in a well, wherein the following steps are carried out:
- a water-based well fluid is circulating in said well, said water-based fluid being not an "O/W" emulsion,
- a quantity of less than 0,1% by weight of one or more compounds selected from the group consisting of partial polyol esters with C6-C22 fatty acids is added,
- the chain lengths of the acid and alcohol parts are chosen such that said one or more compounds
- are dispersible or soluble in water,
- do not form an emulsion between the aqueous filtrate and the reservoir oil,
- directly pass into the filtrate through the cake without being held back or blocked in the cake that may form on the well wall,
- adsorb sufficiently on the porous formation.

2. Method as claimed in claim 1, wherein the chain length of the fatty acids ranges between C6 and C12, preferably between C8 and C10.

3. Method as claimed in any one of claims 1 or 2, wherein, in the partial ester, the molar ratio of the number of free hydroxyl groups to the number of hydroxyl groups esterified by a fatty acid is at least 1:1, preferably at least 2:1, more preferably at least 3:1.

4. Method as claimed in any one of claims 1 or 3, wherein said polyol is a polyglycerol having between 24 and 30% molar of glycerol, between 28 and 34% molar of diglycerol, between 20 and 26% molar of triglycerol, between 9 and 15% molar of tetraglycerol, and between 4 and 10% molar of pentaglycerol.

5. Method as claimed in claim 4, wherein said polyglycerol has 27% molar of glycerol, 31% molar of diglycerol, 23% molar of triglycerol, 12% molar of tetraglycerol, 7% molar of pentaglycerol.

## Patentansprüche

1. Verfahren zum Reduzieren oder Vorbeugen der Beschädigung einer porösen und durchlässigen Formation am Rand eines Bohrlochs, wobei die folgenden Schritte ausgeführt werden:
- in dem Bohrloch wird ein Fluid auf Wasserbasis in Zirkulation gebracht, das keine "Öl-in-Wasser-Emulsion" ist,
- eine Menge von weniger als 0,1 Gew.-% einer oder mehrerer Verbindungen werden zugefügt, ausgewählt aus der Gruppe der Partialester von Polyolen mit Fettsäuren mit 6-22 C-Atomen,
- die Kettenlängen der Säure- und Alkoholanteile werden so ausgewählt, dass die Verbindung(en):
- in Wasser dispergierbar oder löslich ist (sind),
- keine Emulsion zwischen dem wässrigen Filtrat und Öl der Lagerstätte bildet (bilden),
durch den Cake direkt in das Filtrat übergeht (übergehen), ohne in dem Cake zurückgehalten oder blockiert zu werden, der sich gegebenenfalls an den Wänden des Bohrlochs gebildet hat,
- von dem Gestein der Lagerstätte adsorbiert wird (werden).

2. Verfahren nach Anspruch 1, wobei die Kettenlänge der Fettsäuren im Bereich zwischen 6 bis 12 C-Atomen, und bevorzugt zwischen 8 bis 10 C-Atomen liegt.

3. Verfahren nach einem der Ansprüche 1 und 2, wobei im Partialester das Molverhältnis der Anzahl an freien Hydroxylgruppen zur Anzahl an mit einer Fettsäure veresterten Hydroxylgruppen mindestens 1:1, bevorzugt mindestens 2:1, am stärksten bevorzugt mindestens 3:1 beträgt.

4. Verfahren nach einem der Ansprüche 1 bis 3, wobei das Polyol ein Polyglycerol ist, das aus 24 bis 30 Mol-% Glycerol, 28 bis 34 Mol-% Diglycerol, 20 bis 26 Mol-% Triglycerol, 9 bis 15 Mol-% Tetraglycerol, 4 bis 10 Mol-% Pentaglycerol besteht.

5. Verfahren nach Anspruch 4, wobei das Polyglycerol aus 27 Mol-% Glycerol, 31 Mol-% Diglycerol, 23 Mol-% Triglycerol, 12 Mol-% Tetraglycerol, 7 Mol-% Pentaglycerol besteht.
